(19) **Europäisches Patentamt**
**European Patent Office**
**Office européen des brevets**

(11) **EP 1 050 334 A1**

(12) **EUROPÄISCHE PATENTANMELDUNG**

(43) Veröffentlichungstag:
08.11.2000 Patentblatt 2000/45

(51) Int Cl.⁷: **B01F 3/04**, B01F 15/00

(21) Anmeldenummer: 00810089.3

(22) Anmeldetag: 02.02.2000

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **02.05.1999 CH 81099**

(72) Erfinder: **Schürch, Ernst**
**6233 Büron (CH)**

(74) Vertreter: **Arato, Laszlo**
**Seebuchtstrasse 19,**
**Postfach 41**
**6374 Buochs (CH)**

(71) Anmelder: **ARNOLD AG**
**6105 Schachen LU (CH)**

(54) **Schraubenrührer**

(57)    Die Erfindung betrifft ein Verfahren und eine Vorrichtung (3) für die Durchführung des Verfahrens, um mit geringstem Energieaufwand einen torusförmigen Teil (20) geringer Energiedichte eines mit Flüssigkeit gefüllten Beckens (1) zu umströmen und mit Hilfe dieser Strömung (12) die Verweilzeit von Luftblasen (17) zu verzögern und/oder die Sedimentation von grobdispersen, festen Teilchen zu verhindern. Als Vorrichtung wird ein Schraubenrührer (3) mit gestreckten und schlanken Rührflügeln (5a, 5b) vorgeschlagen, die vorzugsweise eine Schalenbauart aufweisen und in die Schubrichtung und gegen den Uhrzeigersinn gepfeilt sind.

Fig.1

**Beschreibung**

Die Erfindung betrifft ein Verfahren und eine Vorrichtung für die Durchführung des Verfahrens, um mit geringstem Energieaufwand einen torusförmigen Teil geringer Energiedichte eines mit Flüssigkeit gefüllten Beckens zu umströmen und mit Hilfe dieser Strömung die Verweilzeit von Luftblasen zu verzögern und/oder die Sedimentation von grobdispersen, festen Teilchen zu verhindern. Das Fachgebiet der Erfindung ist die chemische und die biologische Verfahrenstechnik und insbesondere die Abwassertechnik, wo die Erhaltung der Dispersion durch sanfte und energiearme Bewegung von quasi lagernden Flüssigkeiten von vitaler Bedeutung und grossem technischen wie wirtschaftlichem Interesse ist.

Wird ein Abwasser künstlich belüftet, so entstehen darin aus Bakterien und Kleinlebewesen besiedelte Schlammflocken, der sogenannte Belebtschlamm, welcher die Reinigungsarbeit, zwecks Selbsternährung durch Verzehrung der Schmutzstoffe, bewirkt. Da die Dichte der Schlammflocken grösser ist als die Dichte der umgebenden Flüssigkeit, drängt die Schwerkraft die Schlammflocken zu setzen und somit zur Bildung vom Sediment. Wenn die künstliche Belüftung so stark forciert wird, dass das Absetzen der Schlammflocken das Hochsteigen der Luftblasen verhindert, verbleiben die Schlammflocken in der Schwebe und gedeihen zu Gunsten des Verfahrens im Überfluss der Nährstoffe und der Atmungsluft. Eine Binsenwahrheit der Klärtechnik ist, dass im Sediment saure Gärung entsteht und darin die Population der Fadenbakterien (Sphaerotilus natans) explodiert. Die Lebensgemeinschaft der Fadenbakterien erscheint in Zotten, die daumengross sein können und so bauschig sind, dass dadurch die Absetzfähigkeit des Belebtschlammes und somit die Trennwirkung der Nachklärbecken total versagt. Das "Kippen" genannte Phänomen ist folgenschwer, denn es bedingt die Trockenlegung und Desinfektion aller abwasserbenetzten Anlageteile. Zudem schützt das Gesetz die Gewässer gegen die als "Abwasserpilze" genannten Bakterien, die als Fischgift berüchtigt sind, so dass alles Erforderliche veranlasst und unternommen wird, dass kein verseuchtes Abwasser in den Vorfluter gelangt. Aus diesen Gründen gilt als erste Priorität der Betriebssicherheit der biologischen Kläranlagen, als Prophylaxe jegliche Sedimentation des Belebtschlammes im Belebungsbecken zu verhindern. Weil der überflüssige Sauerstoff die organischen Substanzen des Wassers mineralisiert und so zur Verringerung der Schmutzstoffe beiträgt, ist die Betriebssicherheit der Kläranlagen jahrzehntelang mit Sauerstoffüberschuss erkauft worden. Dabei war der Sauerstoffeintrag und die permanente Verhinderung der Sedimentation, egal ob mit Druckluft- oder Oberflächenbelüftern, stets als einzige Aufgabe gesehen worden.

In der Schrift DE 2904101 wird die Optimierung eines vorzugsweise rechteckigen Belebungsbeckens durch Druckluftbelüftung mit dem Einsatz einer zusätzlichen Strömungshilfe vorgeschlagen. Dazu wird mit einem zentralen Steigrohr ein Wasserstrahl erzeugt, der sich auf der Beckenoberfläche in alle Richtungen verbreitet und den senkrechten Beckenwänden entlang gegen den Boden strömt, so dass die sonst aufsteigenden Luftblasen der Druckluft-Kollektoren zu einem beträchtlichen Umweg gezwungen sind und so mehr Zeit für die Abgabe ihrer Sauerstofffracht verbleibt. Dazu wird in der Beckenachse ein ummantelter Propellerrührer als "Strahltriebwerk" als Zentrum einer torusförmigen Strömung gestellt, und die Kollektoren der Druckluftbelüftung entlang den Beckenwänden installiert und im Bereich des Beckenbodens die Strömung so forciert, dass sich dort keine Sedimente bilden.

Der Nachteil dieser Lösung ist, dass der gute Vorsatz der Energieoptimierung, trotz apparativem Aufwand, letztlich verpufft, weil im Steigrohr etwa das zehnfache der in Bodennähe benötigen Strömungsgeschwindigkeit benötigt wird.

Aufgabe der vorliegenden Erfindung ist, in einem vorzugsweise rechteckigen Becken, mit kleinem Aufwand an Energie und bescheidenem materiellen Einsatz, die Sedimentation zu verhindern und/oder die Verweilzeit von Luftblasen zu verzögern.

Die Lösung dieser erfinderischen Aufgabe erfolgt gemäss den Merkmalen der Patentansprüche 1 bis 11.

Der erfindungsgemässe Schraubenrührer ist ein Tragflügelsystem, das vorzugsweise in der Mittelachse des Beckens angeordnet ist und mit gestreckten, schlanken, profilierten, vom Umfang ansteigend verwundenen, kongruenten, und vorzugsweise hohlen und gepfeilten Rührwerkflügeln langsam rotiert.

Ein wichtiger Vorteil der Erfindung ist, dass sie den Energiehaushalt aller erdenklichen Arten eines Belebungsbeckens zu optimieren hilft und somit sowohl den aeroben wie den anaeroben Betrieb wie die Belüftung und die Denitrifikation (Deni-), wie auch deren beliebige polyvalente Kombination unterstützt. Die energetische Sparsamkeit dieser Technik ist durch Vergleichsversuche mit Rührwerken vom Stand der Technik erwiesen, denn der neue Schraubenrührer benötigt nur etwa die Hälfte (48 %) Energie, um die gleiche mittlere Strömungsgeschwindigkeit zu erreichen und konvergiert somit zum theoretischen Ideal.

Schraubenrührer sind Tragflügelsysteme, deren Flügel kongruent, auf einer gemeinsamen Achse verankert und mit dieser Achse drehbar sind. Aus der kinetischen Energie der mit der Fluidgeschwindigkeit geförderten Masse lässt sich die Leistung einer hydraulischen Maschine berechnen. Der in Flüssigkeit (der Dichte $\rho$) getauchte, rotierende Propellerrührer ($\Phi = Rd$) erzeugt, nach dem Impulssatz der Strömungslehre, mit der Antriebsleistung (P) einen Massen-($m^{\cdot}$) oder Volumenstrom (V) als Summe der Impulse, entsprechend der Rotationsfläche ($Rd^2.\pi/4$) eines Schraubenrührers, mit der Geschwindigkeit (v).

$$P = \dot{m} \cdot v^2/2$$

$$\dot{m} = A.\rho.v = Rd^2.\Pi/4. \rho.v$$

$$P = Rd^2. \Pi.p.v^3/8$$

Die nachfolgenden Tabellen zeigen die Fluidgeschwindigkeit und den Massenstrom als Funktion der Antriebsleistung und Flügeldurchmesser, mit der Annahme der Leistung, in idealer Flüssigkeit (wenn die Strömung inkompressibel und reibungsfrei ist) wie folgt:

| P = 0.5 kW | | | | | | |
|---|---|---|---|---|---|---|
| Rd | 1 m | 2 m | 3 m | 4 m | 5 m | m |
| V | 1.08 | 0.68 | 0.52 | 0.43 | 0.37 | m/s |
| m | 848 | 2145 | 3684 | 5407 | 7281 | kg/s |
| S | 915 | 1458 | 1915 | 2325 | 2693 | N |
| P = 0.75 kW | | | | | | |
| V | 1.24 | 0.78 | 0.59 | 0.49 | 0.424 | m/s |
| m | 974 | 2456 | 4217 | 6189 | 8325 | kg/s |
| S | 1207 | 1915 | 2488 | 3032 | 3529 | N |
| P = 1 kW | | | | | | |
| V | 1.36 | 0.86 | 0.65 | 0.54 | 0.467 | m/s |
| m | 1073 | 2703 | 4642 | 6812 | 9173 | kg/s |
| S | 1459 | 2324 | 3017 | 3678 | 4282 | N |

Die Tabellenwerte zeigen, dass nach der Strahltheorie die Schraubenrührer mit grossem Durchmesser bei gleicher Leistung eine viel grössere Masse in Bewegung setzen, als ein Flügel mit kleinem Durchmesser.

Da die Schuberzeugung der Schraubenflügel von der Strahltheorie völlig unabhängig ist, sind mit den Werten die Grenzen des theoretisch Erreichbaren markiert. Für den Entwurf von Propellerrührern liefert die Strahltheorie ansonsten aber keine Hinweise.

Die Ergebnisse der Wirbeltheorie sind besser als die der Flügelblatt-Theorie, deren Werte von den experimentell erzielbaren stark abweichen. Wegen den Schwierigkeiten und der prinzipiellen Beschränktheit der Wirbeltheorie gilt daher für die Gestaltung und Optimierung eines Propellerrührers nach wie vor das Experiment.

Da es sich beim Schraubenrührer um einen Langsamläufer handelt, besteht kein Zwang, wie bei schnellaufenden Wasserschrauben, flache, breite Flügelblätter mit kleinem Anstellwinkel zu bauen, um die Kavitationsgefahr zu vermeiden, und weil die Antriebsleistung niedrig ist, ist die mechanische Belastung des Flügelblattes klein. Dank diesen Eigenschaften kann das Flügelblatt flach gebaut werden. Als Flügelwerkstoff wird vorteilhafterweise Chromstahl gewählt, der sich, entsprechend der Profilkontur, in zwei Schalen unterteilen und verschweissen lässt. Das flache Flügelprofil mit niedrigem Stirnwiderstand erlaubt die Kürzung der Profiltiefe (t). Die Geometrie des vorgeschlagenen Profilskeletts, mit einem mittleren Dickenverhältnis ($d_m$ = d/t) von 12 % ist so schlank wie Luftpropeller, was angesichts der 1000 mal höheren Dichte des Wassers erstaunlich ist. Um die geschilderte Güte zu erreichen, genügt bereits ein primitives Profilskelett mit einer geraden Profilsehne und einem Kreissegment als Profilrücken, das in der Sehnenmitte t/2 mit $d_{max}$ kulminiert.

Die reale Strömung des Beckeninhaltes ist keine ideale Flüssigkeit. Darum spielt für die angestrebte Zirkulation des Beckeninhaltes die äussere Reibung mit den benetzten Beckenflächen und die im Inneren der Flüssigkeit herrschende Reibung eine wichtige Rolle. Indem die Flüssigkeitsmasse der Strömung beschleunigt wird, etabliert sich die angestrebte Zirkulation und nach einer Weile reduziert sich, im Sinne des zweiten Newtonschen Axiom die Leistungsaufnahme. Wenn sich allerdings nach Erreichen des erwünschten Betriebszustandes die Abnahme der Rührleistung fortsetzt, zerfällt die Dispersion bald, weil die Strömung anstelle des Torus einen Zylinder aus dem Beckenvolumen bildet, der bis zu den Beckenwänden reicht, sich langsam und gleichsinnig mit und um den Schraubenrührer dreht und der Schraubenrührer sich dabei "totläuft".

Der Grund dieses unerwünschten Phänomens ist die oberste Prämisse der Natur, die immer dem Weg des geringsten Widerstandes folgt und darum sobald die äussere Reibung klein genug für die laminare Grenzschicht ist, den Rührbetrieb auf die Art der geringsten Leistungsaufnahme umstellt.

Damit Rührwerke generell und insbesondere der optimierte Schraubenrührer bei geringstem Energiebedarf zuverlässig operieren, sind gegen die drohende Instabilität der Grenzschicht Massnahmen erwünscht. Zur Verhinderung der Rotation des Beckeninhaltes sind als Gegenmassnahmen Beckeneinbauten bekannt, die wie hydraulische Bremsplatten auf die Beckenwände oder auf den zentralen Strömungskegel montiert sind.

Da solche Massnahmen aufwendig sind und sich nicht ohne weiteres nach Grösse und Form des Beckens optimieren lassen, wird erfindungsgemäss die Verschiebung des Schraubenrührers aus dem Beckenzentrum und somit seine exzentrische Anordnung im Becken je nach Bedarf vorgeschlagen.

Im folgenden wird die Erfindung mit den Zeichnungen eines Anwendungs- und Ausführungsbeispiels wie folgt gezeigt:

Fig.1    Querschnitt eines Belüftungsbeckens mit dem torusförmigen Teilvolumen niedriger Energiedichte um den Schraubenrührer und die Anordnung der Rührflügelschnitte.

Fig.2    Profilskelette entsprechend der Rührflügelschnitte und die Befestigung des Rührflügels des Schraubenrührers entsprechend der Fig. 1.

Fig.3    Querschnitt eines Denibeckens mit dem torusförmigen Teilvolumen niedriger Energiedichte und die alternative Ausführungung der Rührflügelschnitte.

Fig.4    Grundriss eines Beckens mit der Annahme, dass die Konturen des exzentrischen Torus bis an die Wände des Beckens reichen.

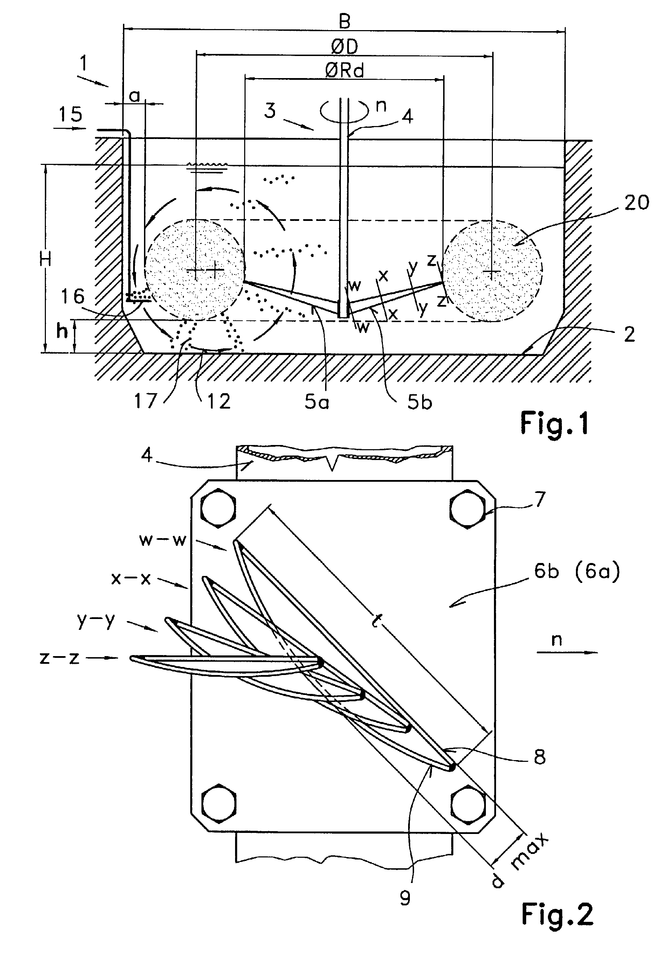

Fig. 1 zeigt den Querschnitt eines wassergefüllten Belüftungsbeckens 1 mit der Fülltiefe H und den über dem Beckenboden 2 installierten Schraubenrührer 3, der sich gegen den Uhrzeiger mit Drehzahl "n" dreht und die Strömung 12 um einen torusförmigen Teil des Beckenvolumens 20 erzeugt. Damit die Einsatzbedingungen des Schraubenrührers günstig sind, ist nach Beckenvolumen und Geometrie der passende Durchmesser und Wellenlänge des Schraubenrührers so gewählt, dass die Bildung eines torusförmigen Teilvolumens des Beckens 20 bei niedrigen Geschwindigkeiten der Umströmung 12 möglich ist. Diese Bedingung ist erfüllt, wenn die Fläche des Beckenquerschnitts $B^2$ nach Abzug der Schubstrahlfläche $Rd^2 . \Pi/4$ des Schraubenrührers 3 so geteilt ist, dass die waagrechten Querschnittflächen des Torus 20 mit dem Durchmesser D und die äusseren Strömungsflächen mit der engsten Breite "a" etwa äquivalent und die kleinste mittlere Strömungsgeschwindigkeit der äusseren Umströmung etwa die Hälfte der Schubstrahlgeschwindigkeit ist. Der Schraubenrührer 3 ist über der Beckensohle 2 mit dem Abstand h montiert, so dass eine zylindrische Mantelfläche mit dem Durchmesser D des torusförmigen Beckenvolumens 20 entsteht und diese gleich der Schubstrahlfläche $Rd^2 . \Pi/4$ des Schraubenrührers 3 ist, so dass die Anström- und Schubgeschwindigkeit der Umströmung etwa gleich bleibt.

Mit der relativ hohen Geschwindigkeit der Strömung 12 im Bereich des Beckenbodens 2 wird eine rotationshyperboloidartige Anströmung des Schraubenrührers 3 erzeugt, die die Gefahr der Ablagerung bannt und den Einsatz von Strömungshilfen wie Strömungskegel in der Beckenmitte völlig überflüssig macht.

Wird Druckluft 15 durch den Kollektor 16 in das Becken 1 geleitet, so trägt die Strömung 12 die Luftblasen in die Mitte des Beckens 1, wie die Fig. 1 zeigt, zum Schraubenrührwerk 3 und verdoppelt dabei etwa ihren Aufsteigweg und die Aufenthaltszeit mindestens.

Der Schraubenrührer besteht aus der vorzugsweise fliegend gelagerten Welle 4, die die Rührflügel 5a, 5b trägt. Sie ist auf einer nicht gezeigten Brücke montiert und wird üblicherweise von einem Drehstrom-Getriebemotor, der sich mit einem Rührwerkflansch und Nivellierschrauben auf die Brücke stützt, angetrieben. Die Welle 4 besteht vorzugsweise aus einem quadratischen Hohlprofil aus Stahl, an dem sich die Rührflügel 5a, 5b mit den Flanschen 6a, 6b, gemäss der Fig. 2 mit den Schrauben 7 befestigen lassen. Die Schnitte w-w, x-x, y-y, z-z der Fig. 1 und Fig. 2 zeigen Lage und Querschnitt der Profilskelette der Rührflügel 5a, 5b. Der bevorzugte Aufbau der Rührflügel 5a, 5b ist die Schalenbauweise in Schweisskonstruktion. Die Schnitte w-w bis z-z sind in 0 bis 3/3 des Rührflügelradius angelegt und zeigen die konstante Dicke der Schalen, die aus der Platte 8 und den bombierten Profilrücken 9 geformt sind. Die Platte 8 bildet die Profilsehne im Schnitt w-w mit der Länge "t" und die grösste Profildicke "d max" mit den Profilrücken 9. Die Rührflügel 5a, 5b sind vorzugsweise aus Chromstahl gefertigt und im Bereich des Schnittes w-w am Flansch 6b mit einer nicht gezeigten Ecknaht verschweisst. Die Rührflügel 5a, 5b sind hohl und weisen keinen Holm auf. In Wasser getaucht, erzeugen sie einen hydraulischen Auftrieb, der entgegen dem Eigengewicht und dem Rührwerkschub wirkt. Da der Schub des Schraubenrührers eine Funktion der Umfangsgeschwindigkeit ist, sind die Rührflügel 5a, 5b verwunden, so dass der Anstellwinkel von der Rührflügelspitze (z-z) bis zur Rührflügelwurzel (w-w) von 0 bis 45° und die Länge der Profilsehne "t" von etwa 50 bis 100% stetig zunimmt. Die Rührflügel 5a, 5b sind entsprechend der Richtung der Anströmung gepfeilt, so dass die Bildung und die Umströmung des torusförmigen Beckenvolumens 12 begünstigt wird.

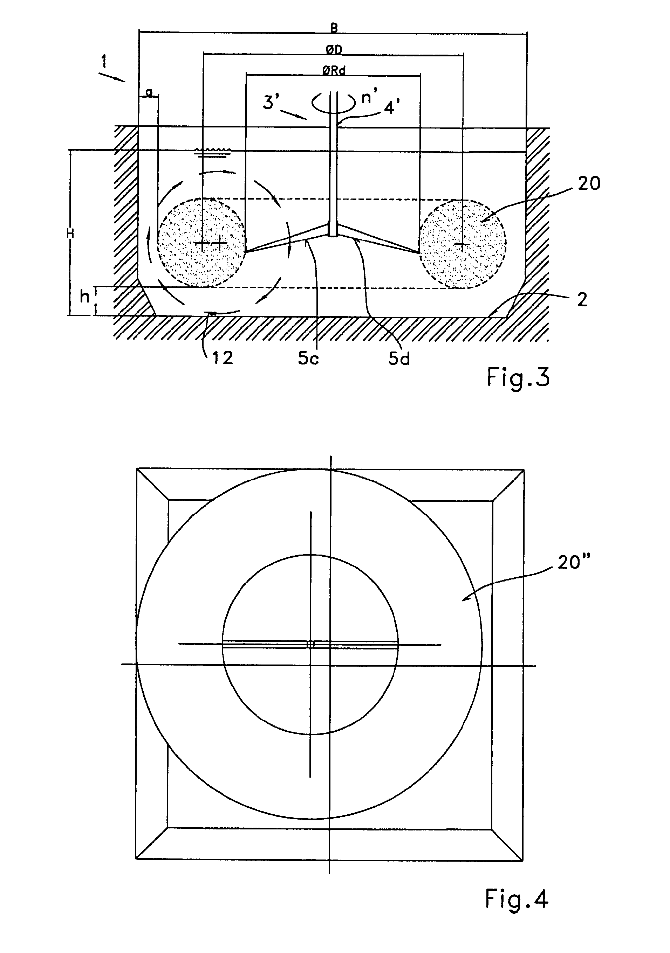

Fig. 3 zeigt den Querschnitt eines gefüllten Denibeckens 1' mit der Fülltiefe H und den über dem Beckenboden 2 installierten Schraubenrührer 3', der sich im Uhrzeigersinn mit Drehzahl "n'" dreht und die Strömung 12' um einen torusförmigen Teil des Beckenvolumens 20 erzeugt. Da es beim Einsatz des Schraubenrührers in einem Denibecken 1' einzig um die Vermeidung der Sedimentation und somit um die Erhaltung der Dispersion geht, wird der Schraubenrührer 3' mit Förderrichtung gegen den Beckenboden angeordnet. Entsprechend der Förderrichtung 12 sind die Flügel 5c, 5d des Schraubenrührers 3' gepfeilt. Die in der Fig. 3 vorgeschlagene Anordnung erlaubt die Reduktion der Länge der Welle 4' des Schraubenrührers 3', die besonders bei einem exzentrischen Betrieb des Schraubenrührers, wegen der höheren Beanspruchung der Lagerung, von Vorteil ist.

In der Figur 4 wird im Grundriss eines quadratischen Beckens die innere und die äussere Kontur eines exzentrischen Torus 20" des Strömungsvolumens gezeigt, der entlang der Beckendiagonalen so verlagert ist, dass er gleichzeitig zwei Wände des Beckens touchiert.

### Patentansprüche

1. Verfahren zur Erzeugung und Umströmung (12) eines torusförmigen Volumens (20) eines mit Flüssigkeit gefüllten Beckens (1), um dieser Strömung (12) mit geringstem Energieaufwand die Verweilzeit von Luftblasen (17) zu verzögern und/oder die Sedimentation grobdisperser, fester Teilchen zu verhindern, dadurch gekennzeichnet, dass der mittlere Durchmesser (D) kleiner als der doppelte Innendurchmesser (d) des torusförmigen Volumens (20) ist und der torusförmige Teil des Beckenvolumens die geringste Energiedichte des Beckenvolumens aufweist.

2. Verfahren nach Anspruch 1 dadurch gekennzeichnet, dass die Fläche des äquatorialen Querschnitts des torusförmigen Volumens (20) und ihre Differenz zum Grundriss des Beckens (1) gleich gross sind.

3. Verfahren nach den Ansprüchen 1 und 2 dadurch gekennzeichnet, dass das torusförmige Beckenvolumen (20) über dem Beckenboden (2) um den Abstand "h" liegt, und dass die Mantelfläche des Zylinders, mit dem Umfang des mittleren Durchmessers (D) des torusförmigen Beckenvolumens (20) gleich gross wie der Querschnitt mit dem Durchmesser (Rd) des Schraubenrührers (3, 3') ist.

4. Schraubenrührer (3, 3') für die partielle Umwälzung des Volumens eines vorzugsweise rechteckigen Beckens (1), dadurch gekennzeichnet, dass die Streckung (Rd/t) der Rührflügel (5a, 5b, 5c, 5d) mit dem Durchmesser (Rd) grösser als zwölf (> 12) ist.

5. Schraubenrührer (3, 3') nach Anspruch 4 dadurch gekennzeichnet, dass die Schlankheit (d/t) des Profilskeletts der Rührflügel (5a, 5b, 5c, 5d) mit der Profiltiefe (t) kleiner als 20 % ist.

6. Schraubenrührer (3, 3') für die Umwälzung des Volumens eines vorzugsweise rechteckigen Beckens nach den Ansprüchen 4 und 5 dadurch gekennzeichnet, dass der Rührflügel (5a, 5b, 5c, 5d) aus einer Schale (8, 9) besteht.

7. Schraubenrührer (3, 3') nach Anspruch 6 dadurch gekennzeichnet, dass die Rührflügel (5a, 5b, 5c, 5d) hohl sind.

8. Schraubenrührer (3, 3') nach den Ansprüchen 6 und 7 dadurch gekennzeichnet, dass die Schalen (8, 9) der Rührflügel (5a, 5b) verschweisst und auf einen Halteflansch (6(a, b)) geschweisst sind.

9. Schraubenrührer (3, 3') nach den Ansprüchen 4 bis 8 dadurch gekennzeichnet, dass die Rührflügel (5a, 5b, 5c, 5d) in Richtung des Schubes gepfeilt sind.

10. Schraubenrührer (3, 3') nach den Ansprüchen 4 bis 9 dadurch gekennzeichnet, dass die Rührflügel (5a, 5b, 5c, 5d) gegen die Drehrichtung (n, n') gepfeilt sind.

11. Schraubenrührer (3, 3') nach den Ansprüchen 4 bis 10 dadurch gekennzeichnet, dass die Länge der Profilsehne (t) von der Rührflügelspitze (z-z) bis zur Rührflügelwurzel (w-w) von 50 bis 100% stetig zunimmt.

12. Schraubenrührer (3, 3') nach den Ansprüchen 4 bis 11 dadurch gekennzeichnet, dass die Drehzahl (n, n') der Rührflügel (5a, 5b, 5c, 5d) kleiner als 15 UpM ist.

13. Schraubenrührer (3, 3') nach den Ansprüchen 4 bis 12 dadurch gekennzeichnet, dass der Schraubenrührer (3, 3') ausserhalb des Beckenzentrums und somit exzentrisch angeordnet und betrieben wird.

Fig.1

Fig.2

Fig.3

Fig.4

Europäisches
Patentamt

**EUROPÄISCHER RECHERCHENBERICHT**

Nummer der Anmeldung

EP 00 81 0089

| | **EINSCHLÄGIGE DOKUMENTE** | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
| A | DE 14 57 186 A (H.WEINRICH) 4. Juni 1970 (1970-06-04) * Ansprüche; Abbildungen * --- | 1,4 | B01F3/04 B01F15/00 |
| A | DE 12 78 409 B (H.WEINRICH) * Ansprüche; Abbildungen * ----- | 1,4 | |

RECHERCHIERTE SACHGEBIETE (Int.Cl.7)

B01F
C02F

Der vorliegende Recherchenbericht wurde für alle Patentansprüche erstellt

| Recherchenort | Abschlußdatum der Recherche | Prüfer |
|---|---|---|
| BERLIN | 28. August 2000 | Cordero Alvarez, M |

KATEGORIE DER GENANNTEN DOKUMENTE

X : von besonderer Bedeutung allein betrachtet
Y : von besonderer Bedeutung in Verbindung mit einer
     anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
     nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes
     Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**                    EP 00 81 0089

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-08-2000

| Im Recherchenbericht angeführtes Patentdokument | Datum der Veröffentlichung | Mitglied(er) der Patentfamilie | Datum der Veröffentlichung |
|---|---|---|---|
| DE 1457186        A | 04-06-1970 | KEINE | |
| DE 1278409        B | | KEINE | |

Für nähere Einzelheiten zu diesem Anhang : siehe Amtsblatt des Europäischen Patentamts, Nr.12/82